Europäisches Patentamt

(19) European Patent Office

Office européen des brevets

(11) Publication number : **0 440 848 B1**

# (12) EUROPEAN PATENT SPECIFICATION

(45) Date of publication of patent specification :
16.12.92 Bulletin 92/51

(51) Int. Cl.⁵ : **B65G 47/26, A21C 15/00**

(21) Application number : **90102394.5**

(22) Date of filing : **07.02.90**

(54) **An apparatus for spacing contiguous rows of food products, in particular shortbread slices, exiting an oven on a belt conveyor.**

(43) Date of publication of application :
14.08.91 Bulletin 91/33

(45) Publication of the grant of the patent :
16.12.92 Bulletin 92/51

(84) Designated Contracting States :
AT BE CH DE DK ES FR GB GR IT LI LU NL SE

(56) References cited :
EP-A- 0 212 027
WO-A-88/05417
DE-B- 1 042 483
FR-A- 2 371 881
US-A- 3 809 207

(73) Proprietor : **BARILLA G. E R. F.LLI - Società per Azioni**
**Viale Riccardo Barilla, 3/A**
**I-43100 Parma (IT)**

(72) Inventor : **Bertozzi, Fausto**
**Via Duccio Galimberti, 10**
**I-43100 Parma (IT)**

(74) Representative : **Vannini, Torquato et al**
**JACOBACCI-CASETTA & PERANI S.p.A., Via**
**Visconti di Modrone 7**
**I-20122 Milano (IT)**

## Description

This invention relates to an apparatus for spacing contiguous rows of food products, in particular shortbread slices, exiting an oven on a belt conveyor driven into a selected direction.

The production lines for some food products such as shortbread slices, biscuits, and the like, for example, include at least one baking or drying or conditioning oven through which the food products are transported at a selected rate by a belt conveyor on which they are laid in side-by-side rows parallel to the direction of transport.

To best utilize the oven capacity, it is known to set the rows of products very close together, this being the condition in which the rows of products present themselves at the oven outlet, wherefrom they are picked up by another belt conveyor and taken to a packaging machine.

Some packaging machines in current use on production lines of the above kind are set up to package one product or a group of products containing a selected number of products at a time, it is a requirement that the products be fed forward in a single row at constant pitch distances from one another which are preset to suit the machine packaging rates.

Thus, there exists a well-recognized demand for an ability to re-arrange the products moving in contiguous rows toward the packaging machine in a single row, gather them into groups as by providing counting or weighing steps, and set the product spacing within said single row to conform with the selected constant pitch. A machine for diverging a row of articles in spaced a part rows is described in US-A-3.809.207.

Besides the above-noted demand, there still exists the added need to have all the operations that make up the entire production cycle automated.

In the present state of the art, such automation can only be accomplished with the products driven forward in orderly rows held mechanically separated from one another, such as along longitudinal costraining troughs.

By this provision, in fact, the products in any one row can be variously set apart and diverted from the other rows of products to suit the mechanical handling requirements of the several operations to be performed on the products. However, setting the products into individual troughs as mentioned above is opposed by the very fact that the products leave the oven in closely spaced rows, so that it cannot be ensured that each individual row is automatically routed to a corresponding trough with no risk of the products from one row interfering with products in adjacent rows.

To avoid this risk, it would be necessary for the products to travel through the oven in already set-apart rows, but this would result in a considerable and unacceptable de-rating of the oven capacity. It is for this reason that it has been preferred to handle the products manually downstream from the oven, to route them in a single row to any counting and/or weighing stations and to the packaging machine, and to cope with such recognized drawbacks of manual operations as increased labor input, lowered output, and higher production costs.

The problem that underlies this invention is to provide an apparatus which enables rows of food products laid on a belt conveyor exiting a baking oven to be spaced transversely apart in an automated fashion.

This problem is solved, according to the invention, by an apparatus characterized in that it comprises a load-bearing structure extending at least partially over the conveyor, first and second belts borne on and driven through corresponding pulley pairs fixedly mounted on rotating axles which lie in a perpendicular direction (Y) with respect to said selected direction, the belts having a working run which extends substantially at the same level as the conveyor and an overlying return run, a plurality of parallel rods lying crosswise to said direction and being mounted to the belts, a corresponding plurality of blocks mounted slidably on the rods and being provided with fingers adapted to engage with food products upstream of said working run, and spacer means for transversally spacing apart the blocks of each rod at the working run, and approach means for setting the blocks close together at the return run.

Further features and the advantages of the apparatus according to the invention will become apparent from the following detailed description of a preferred embodiment thereof, given by way of example and not of limitation with reference to the accompanying drawings.

In the drawings:

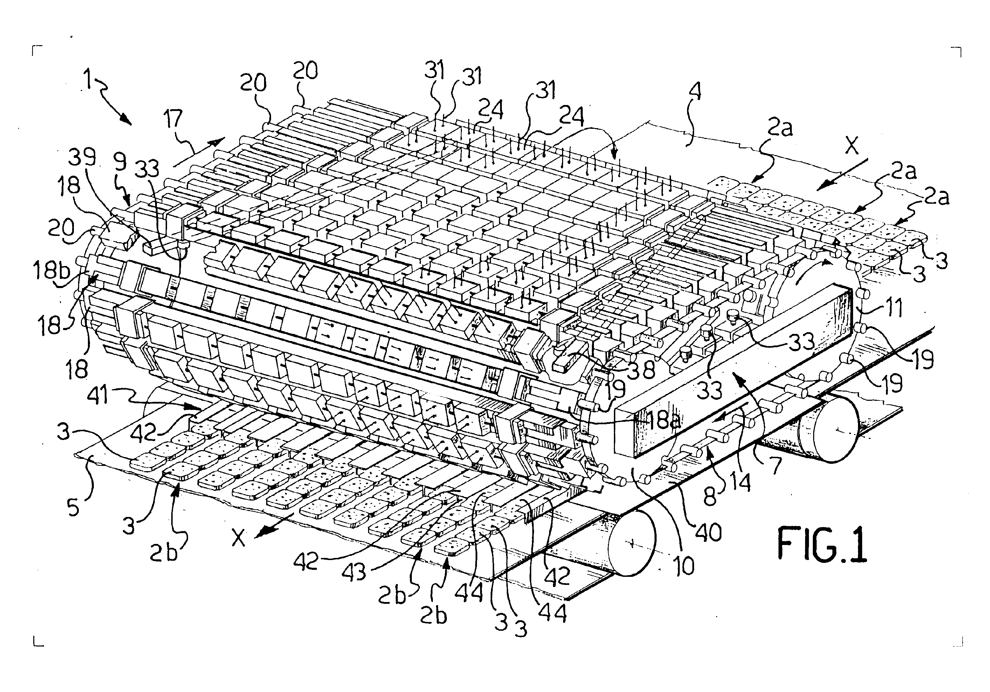

Figure 1 is a perspective view of the apparatus according to the invention;

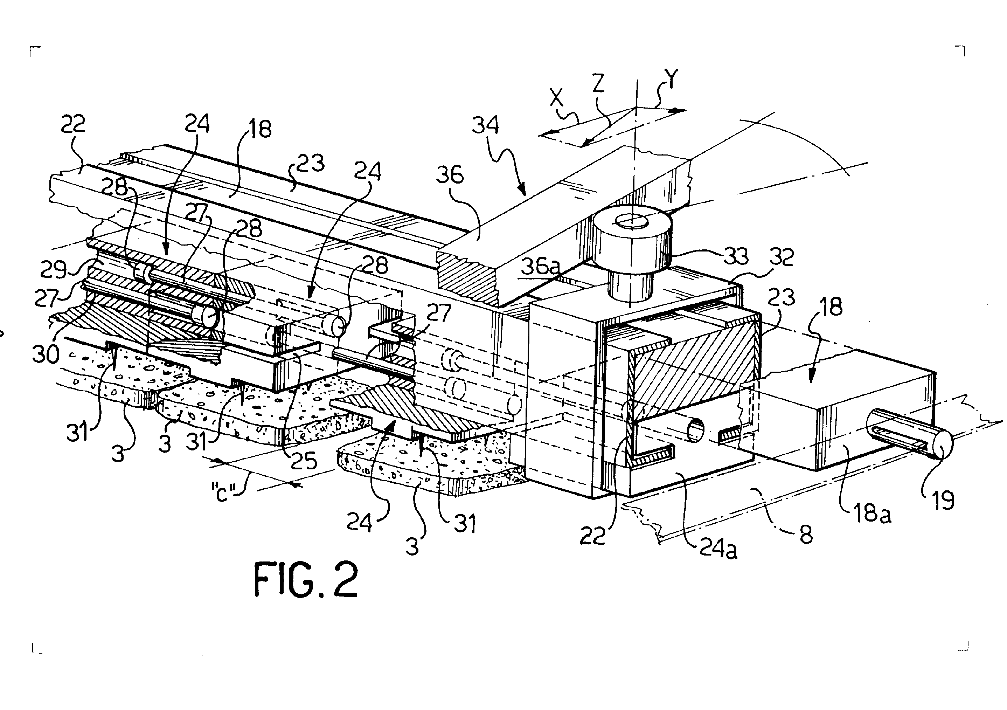

Figures 2 and 3 are a perspective and side view, respectively, showing schematically and to an enlarged scale a detail of the apparatus of Figure 1;

Figure 4 is a perspective view showing schematically the apparatus of Figure 1 in operation; and

Figures 5 and 6 are sectional views showing schematically a detail of the apparatus of Figure 1 at two successive stages of its operation.

With reference to the drawing views, generally indicated at 1 is an apparatus for spacing a plurality of contiguous rows 2a of food products, in particular of shortbread slices, exiting an oven, known per se and not shown, on a belt conveyor 4 driven along a selected direction denoted by X.

In a preferred embodiment of this invention, the apparatus 1 is located downstream from the conveyor 4 relatively to the direction X of advance and upstream of a second belt conveyor 5 extending in line with the conveyor 4 and being, in turn, operative to transport a plurality of rows 2b of products 3. The rows 2b lie parallel to the direction X of advance spaced regularly apart a constant pitch distance to feed a packaging machine, not shown.

The apparatus 1 comprises a load-bearing structure 7 located between the conveyors 4 and 5 and partly overlying them.

Respectively indicated at 8 and 9 are first and second endless belts trained around and driven through respective pulley pairs 10, 11 and 12, 13, of which two are powered, fixedly mounted on horizontal rotating axles lying in a perpendicular direction Y with respect to the direction X of advance, said axles being held by the structure 7.

It should be noted that on the belts 8 and 9 there are defined a horizontal working run 14, extending and being driven along the direction X from an inlet side 15 located at the conveyor 4 to an outlet side 16 at the second conveyor 5, and a return run 17 overlying the working run 14 parallel thereto and extending from the outlet side 16 to the inlet side 15.

In addition, the working run 14 locates at a level slightly above that of the conveyor 4.

The apparatus 1 comprises a plurality of parallel rods 18 lying along the transverse direction Y and being mounted to the belts 8 and 9 at short spacings from one another.

More specifically, mounted on the ends 18a, 18b of each rod 18 is a respective pin 19, 20 extending in continuation of the rod itself and being affixed to the corresponding belt 8, 9.

The pulleys 10, 13 are formed peripherally with recesses 21 adapted to engage with the pins 19, 20 for driving the belts 8 and 9.

Affixed around each rod 18 are two identical, opposed C-shaped sectional members which extend longitudinally on the rod.

It should be noted that respective free flanges 22a, 23a of the sectional members on one rod 18, which flanges are oppositely located in mutually spaced-apart relationship and inwardly with respect to the plurality of the rods 18 mounted to the belts 8 and 9, constitute guides for a plurality of blocks 24 which are mounted slidably on the rod 18 and at least equal in number to the contiguous rows of food products 3.

Each block is formed, on two opposed sides thereof, with two cutouts 25, 26 intended for accommodating said flanges 22a, 23a in a sliding fashion.

The blocks 24 of each rod 18 are also associated with one another such that each block 24 is connected to adjacent blocks 24 on the same rod 18 at a preset clearance "c" longitudinally of the rod 18 in the transverse direction Y.

In particular, for each rod 18, each block 24 is connected to an adjacent block by a respective stem 27 extending along the transverse direction Y and being provided at the ends with respective stops 28.

Formed in each block 24 are two longitudinal cavities, both indicated at 29, which extend along the direction Y-Y, are offset and open on opposed sides of the block 24 to receive respective stops 28; furthermore, two through-going bores, both indicated at 30, are formed in each block 24 in continuation of said cavities 29 to accommodate respective stems 27 slidably therein.

Adjacent blocks 24 of each rod 18 are arranged, moreover, with their cavities 29 facing each other and the through-going bores 30 aligned, thereby any two adjacent blocks 24 would be interconnected by one stem 27 extending through two bores 30 and with the two stops 28 positioned in two opposed cavities 29.

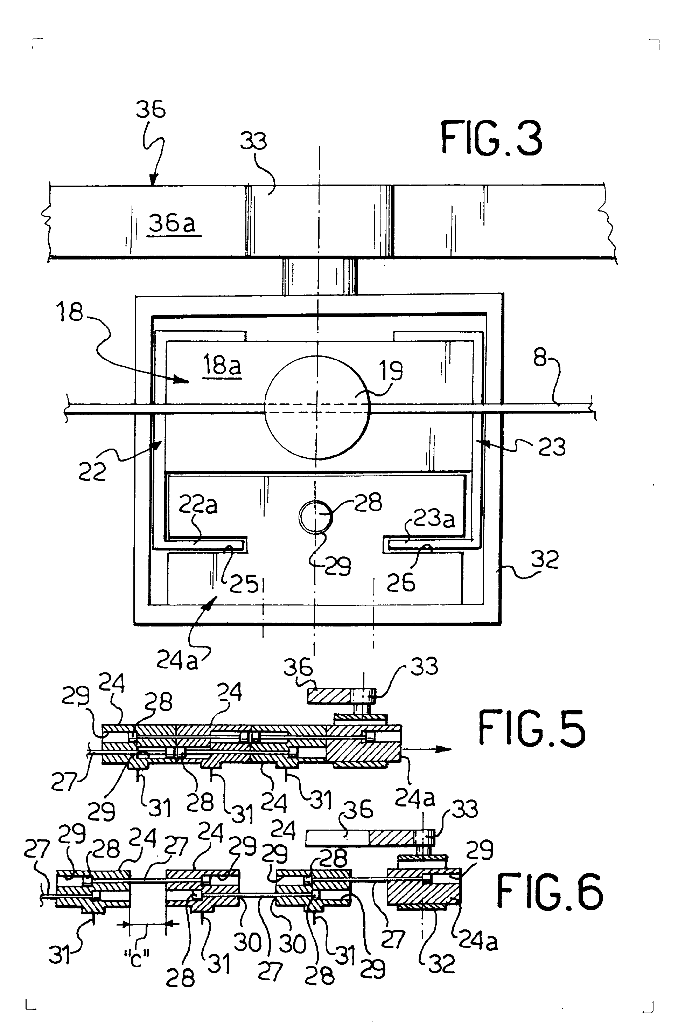

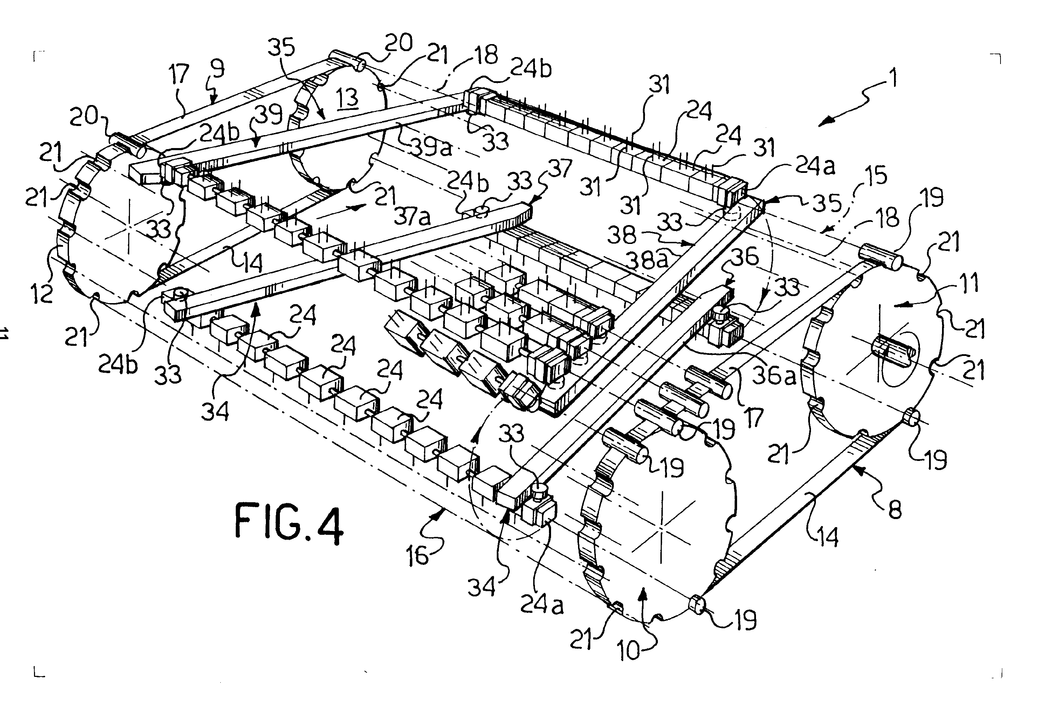

Accordingly, any two adjacent blocks are connected at a preset clearance "c" relatively to the length of the respective stem 27; in addition, two adjacent blocks are enabled to slide on the rod 18 toward each other from a first end or limit position where they are set close together (see Figure 5) to a second end or limit position where they are set apart by an amount corresponding to said clearance "c" (see Figure 6).

In accordance with the invention, the blocks 24 are provided with a pair of parallel, outwardly oriented fingers 31 adapted to engage with the food products 3 on the conveyor 4, at the inlet end 15 upstream of the working run 14, as explained hereinafter.

For each rod 18, the two outermost blocks 24, that is the closest block 24a to the first belt 8 and the closest one 24b to the second belt 9, together with the corresponding rod 18 portions and portions of the sectional members 22, 23, are set in respective quadrilateral frames 32 attached to the blocks 24a, 24b.

Mounted on each frame 32 is a cam follower 33 of the idler roller type which faces inwards with respect to the plurality of rods 18 mounted on the belts 8 and 9.

The apparatus 1 of this invention further comprises spacer means 34 for spacing apart the plurality of blocks 24 on each rod 18 at the working run 14, and approach means 35 for setting such blocks 24 close together at the return run 17.

The spacer means 34 consists of a first pair of linear, horizontal and divergent, cams 36, 37 which are both inclined at an angle to the direction X of advance, being supported on the structure 7 at the working run 14, in the vicinity of the first and second belts 8, 9, respectively.

The cams 36 and 37 are arranged to act on each pair of followers 33 of the outermost blocks 24a and 24b on each rod 18, at the working run 14.

The approach means 35 are comprised of a second pair of linear, horizontal and divergent, cams 38, 39 sloping toward the direction X, which are both supported on the structure 7 at the return run 17, in the vicinity of the first and second belts 8, 9, respectively.

It should be noted that the second pair of cams 38, 39 are set astride to act on each pair of cam followers 33 of the outermost blocks 24a and 24b on each rod 18, at the return run 17.

Indicated at 40 is a horizontal flat plate having a smooth top, being carried on the structure 7, and extending from the inlet side 15 to the outlet side 16 at the same level as the conveyors 4 and 5, substantially in continuation thereof.

Furthermore, the plate 40 would underlie the working run 14 a limited distance therefrom.

The apparatus 1 also comprises opposing means 41, supported at the outlet side 16 downstream from the working run 14, for disengaging the food products 3 from the fingers 31.

Said opposing means 41 comprise a crosswise array of plural horizontal reeds 42, extending parallel in mutually spaced-apart relationship and in substantial continuation of the working run 14 above an end portion of the plate 40, and over a short distance above the second conveyor 5.

The reeds 42 have respective vertical ribs 43 depending therefrom which are formed integrally and extend along the direction of advance. The ribs 43 define a plurality of parallel tracks 44 on the second conveyor 5.

The operation of the apparatus 1 according to the invention will be described next with particular reference to Figures 4, 5 and 6.

Food products 3 exiting the oven would be advanced on the belt conveyor 4 in the direction X, while being arranged in contiguous rows 2a, toward the inlet side or end 15 of the apparatus 1, the rods 18 of which are rotated by the belts 8 and 9 and the respective pulley pairs 10, 11 and 12, 13 at a rate which corresponds substantially to the rate of advance of the products 3 on the conveyor 4.

It should be noted that the blocks 24 on a rod 18 at the inlet side 14 are set close together (see Figure 4) as a result of the previous action of the approach means 35 along the return run 17, as explained hereinafter.

On a row of products 3 reaching the inlet side 15, each product 3 will be engaged by two fingers 31 of a corresponding block 24 on one rod 18.

The rod 18 continues travelling along the working run 14, still with the food products 3 from the aforesaid row engaged by the fingers 31 of the corresponding blocks 24. Thus, the food products 3 will be taken by the conveyor 4 to the smoothly finished plate 40 on which they can slide with no significant frictional resistance.

At the working run 14, the cam followers 33 of the two outermost blocks 24a and 24b on said rod 18 will engage with the first pair of cams 36, 37 of the spacer means 34, specifically by coming in contact through their respective surfaces 36a and 37a facing the belts 8 and 9, respectively.

As the rod 18 is driven forward, the cams 36 and 37 will force the blocks 24 to slide along the beam in the cross direction Y and to separate from one another, and at the end of the working run 14, the blocks 24 and products 3 bound thereto will be separated from each other by a constant pitch distance corresponding to the clearance "c".

On the rod 18 approaching the outlet side 16, it will move past the plate 40 and meet with the opposing means 41, whose reeds 42 interpose themselves between the blocks and the respective food products, 3.

As the rod 18 is moved toward the outlet side or end 16, and raised toward the return run 17, the products 3 are held back by the reeds 42 in the tracks 44 on the second conveyor 5 and disengaged from the fingers 31 moving unrestrictedly through the reeds 42.

The rod 18 is then driven along the return run 17, whereat the cam followers 33 of the two outermost blocks 24a and 24b become engaged by the approach means 35. In particular, the cam followers 33 will contact the cams 38, 39 at their respective confronting surfaces 38a, 39a.

Thus, while advancing along the return run 17, the blocks 24 will be pushed toward one another by the cams 38 and 39 until, on reaching the inlet side 15, they disengage from the approach means 35, and while close against one another, are allowed to engage a fresh row of food products 3 on the conveyor 4.

The description given thus far obviously applies to all the rods 18 of the apparatus 1 which, through the fingers 31 of the blocks 24, will engage successive rows of food products 3 on the conveyor 4 and arrange them, at regular spacings, on the second conveyor 5 to thereby form a plurality of rows 2b.

On the apparatus according to the invention, contiguous rows of food products, in particular shortbread slices, can be quickly spaced apart a selected pitch distance to permit and facilitate mechanical handling of the products. Thus, one can now automate the various mechanical operations required to take the products to a packaging machine.

In addition, by virtue of the products being engaged and therefore guided by the block fingers during the spacing apart step, the risk of products from one row interfering with and obstructing the ones in adjacent rows is considerably reduced if not altogether eliminated.

The apparatus disclosed hereinabove is susceptible, of course, to many changes and modifications; for instance, it could be provided without the lower plate and be arranged directly onto a belt conveyor, without departing from the scope of this invention as set forth in the appended claims.

## Claims

1. An apparatus for spacing contiguous rows of food products, in particular shortbread slices, exiting an oven on a belt conveyor (4) driven into a selected direction (X), said spacing occuring in a direction perpendicular to said direction (X), characterized in that it comprises a load-bearing structure (7) extending at least partially over the conveyor (4), first (8) and second (9) belts borne on and driven through corresponding pulley pairs (10,11 and 12,13) fixedly mounted on rotating axles which lie in a perpendicular direction (Y) with respect axes to said selected direction (X), the belts (8,9) having a working run (14) which extends substantially at the same level as the conveyor (4) and an overlying return run (17), a plurality of parallel rods (18) lying crosswise to said direction (X) and being mounted to the belts (8,9), a corresponding plurality of blocks (24) mounted slidably on the rods (18) and being provided with fingers (31) adapted to engage with food products (3) upstream of said working run (14), and spacer means (34) for transversally spacing apart the blocks (24) of each rod (18) at the working run (14), and approach means (35) for setting the blocks (24) close together at the return run (17).

2. An apparatus according to Claim 1, characterized in that each block (24) is connected to adjacent blocks (24) on one rod (18) at a preset longitudinal clearance ("c") to the beam (18).

3. An apparatus according to Claim 2, characterized in that said spacer means (34) and said approach means (35) are active on outward blocks (24a,24b) in each plural blocks (24) on each rod (18).

4. An apparatus according to Claim 3, characterized in that said spacer means (34) comprise a pair of divergent cams (36,37) set at an angle to said selected direction (X), being supported on the structure (7) at the working run (14) and active on a plurality of cam followers (33) mounted on respective outward blocks (24a,24b) of the rods (18), said cam pair (36,37) being located between the cam followers (33) of the outward block pair (24a,24b) on each rod (18) at the working run (14).

5. An apparatus according to Claim 4, characterized in that said approach means (35) comprise a second pair of convergent cams (38,39) set at an angle to the selected direction (X), being supported on the structure (7) at the return run (17) and adapted to engage said followers (33), the second cam pair (38,39) straddling the followers (33) of the outward block pair (24a,24b) on each rod (18) at the return run (17).

6. An apparatus according to Claim 1, characterized in that it comprises opposing means (41) mounted on said structure (7) downstream from the working run (14) to disengage the food products (3) from the fingers (31).

7. An apparatus according to Claim 6, characterized in that said opposing means (41) comprise an array of parallel coplanar reeds (42) in mutually spaced-apart relationship extending in substantial continuation of said working run (14).

8. An apparatus according to Claim 1, characterized in that said structure (7) extends downstream from said conveyor (4) and comprises a flat plate (40) extending level with the conveyor (4) in substantial continuation thereof and underlying said working run (14).

## Patentansprüche

1. Eine Vorrichtung zum Auseinanderführen sich berührender Reihen von Lebensmitteln, insbesondere Teekuchenscheiben, die einen Ofen auf einem in einer gewählten Richtung (X) angetriebenen Bandförderer (4) verlassen, wobei das Auseinanderführen in einer Richtung senkrecht zur Richtung (X) erfolgt, gekennzeichnet durch eine lasttragende Konstruktion (7), die sich wenigstens teilweise über den Förderer (4) erstreckt, durch ein erstes (8) und ein zweites Band (9), die von entsprechenden Rollenpaaren (10,11 und 12,13) abgestützt und durch diese angetrieben sind, wobei die Rollenpaare auf rotierenden Wellen, die sich in einer bezüglich der gewählten Richtung (X) senkrechten Richtung (Y) erstrecken, befestigt sind und die Bänder (8,9) ein im wesentlichen auf gleicher Höhe wie der Förderer (4) verlaufendes Arbeitstrum (14) sowie ein darüber befindliches Rücklauftrum (17) umfassen, durch eine Mehrzahl von parallelen Stäben (18), die sich quer zur Richtung (X) erstrecken und an den Bändern (8,9) befestigt sind, durch eine entsprechende Anzahl von Blöcken (24), die verschiebbar auf den Stäben (18) angebracht und mit Fingern (31) versehen sind, die für den Eingriff mit Lebensmitteln (3) bandaufwärts des Arbeitstrums (14) ausgebildet sind, und durch eine Abstandseinrichtung (34) zum Auseinanderführen der Blöcke (24) jedes Stabes (18) am Arbeitstrum (14) auf gegenseitigen Abstand in Querrichtung, und durch eine Annäherungseinrichtung (35) zum Eng-Zusammenführen der Blöcke (24) am Rücklauftrum (17).

2. Eine Vorrichtung nach Anspruch 1, dadurch gekennzeichnet, daß jeder Block (24) mit benachbarten Blöcken (24) auf einem Stab (18) unter Einhaltung eines voreingestellten Abstands ("c") längs des Stabes (18) verbunden ist.

3. Eine Vorrichtung nach Anspruch 2, dadurch gekennzeichnet, daß die Abstandseinrichtung (34) und die Annäherungseinrichtung (35) auf äußere Blöcke (24a,24b) in jeder Mehrzahl von Blöcken (24) auf jedem Stab (18) einwirken.

4. Eine Vorrichtung nach Anspruch 3, dadurch gekennzeichnet, daß die Abstandseinrichtung (34) ein Paar divergierender, unter einem Winkel zur gewählten Richtung (X) angeordneter Nocken (36,37) umfaßt, die am Arbeitstrum (14) an der Konstruktion (7) abgestützt sind und auf eine Mehrzahl von Nockenfolgeelementen (33) einwirken, die an jeweiligen äußeren Blöcken (24a,24b) der Stäbe (18) angebracht sind, wobei das Nockenpaar (36,37) zwischen den Nockenfolgeelementen (33) des äußeren Blockpaares (24a,24b) auf jedem Stab (18) am Arbeitstrum (14) angeordnet ist.

5. Eine Vorrichtung nach Anspruch 4, dadurch gekennzeichnet, daß die Annäherungseinrichtung (35) ein zweites Paar konvergierender, unter einem Winkel zur gewählten Richtung (X) angeordneter Nocken (38,39) umfaßt, die am Rücklauftrum (17) an der Konstruktion (7) abgestützt und so ausgebildet sind, daß sie in Eingriff mit den Folgeelementen (33) gelangen, wobei das zweite Nockenpaar (38,39) seitlich außerhalb der Folgeelemente (33) des äußeren Blockpaares (24a,24b) auf jedem Stab (18) am Rücklauftrum (17) angeordnet ist.

6. Eine Vorrichtung nach Anspruch 1, gekennzeichnet durch eine an der Konstruktion (7) bandabwärts des Arbeitstrums (14) angebrachte Trenneinrichtung (41) zum Trennen der Lebensmittel (3) von den Fingern (31).

7. Eine Vorrichtung nach Anspruch 6, dadurch gekennzeichnet, daß die Trenneinrichtung (41) eine Anordnung paralleler koplanarer Rippen (42) umfaßt, die mit gegenseitigem Abstand angeordnet sind und in realer Fortsetzung des Arbeitstrums (14) verlaufen.

8. Eine Vorrichtung nach Anspruch 1, dadurch gekennzeichnet, daß die Konstruktion (7) sich bandabwärts des Förderers (4) erstreckt und eine flache Platte (40) umfaßt, die sich in realer Fortsetzung des Förderers (4) auf dessen Höhe erstreckt und unterhalb des Arbeitstrums (14) angeordnet ist.

**Revendications**

1. Appareil de séparation de rangées contiguës de denrées alimentaires, en particulier de tranches de sablés, sortant d'un four sur une bande convoyeuse (4) entraînée dans une direction sélectionnée (X), ladite séparation survenant dans une direction perpendiculaire à ladite direction (X), caractérisé en ce qu'il comprend une structure porteuse (7) s'étendant au moins partiellement au-dessus de la bande convoyeuse (4), une première (8) et seconde (9) courroies portées et actionnées par des couples correspondants de poulies (10,11 et 12,13) montées de façon inamovible sur des axes de rotation qui se trouvent dans une direction perpendiculaire (Y) à ladite direction sélectionnée (X), les courroies (8,9) ayant une course de fonctionnement (14) qui s'étend sensiblement au même niveau que la bande convoyeuse (4) et une course rétrograde sus-jacente (17), une pluralité de tiges parallèles (18) perpendiculaires à ladite direction (X) et étant montées sur les courroies (8,9), une pluralité correspondante de blocs (24) montés de façon à coulisser sur les tiges (18) et munis de doigts (31) conçus pour s'engrener dans les denrées alimentaires (3) en amont de ladite course de fonctionnement (14), et des moyens séparateurs (34) pour séparer transversalement les blocs (24) de chaque baguette (18) lors de la course de fonctionnement (14), et des moyens d'accès (35) pour resserrer étroitement les blocs (24) lors de la course rétrograde (17).

2. Appareil selon la revendication 1, caractérisé en ce que chaque bloc (24) est relié à des blocs adjacents (24) sur une tige (18) à une distance longitudinale prédéterminée ("c") sur la tige (18).

3. Appareil selon la revendication 2, caractérisé en ce que lesdits moyens séparateurs (34) et lesdits moyens d'accès (35) agissent sur des blocs externes (24a,24b) du groupe de blocs multiples (24) sur chaque tige (18).

4. Appareil selon la revendication 3, caractérisé en ce que lesdits moyens séparateurs (34) comprennent un couple de cames divergentes (36,37) formant un angle par rapport à ladite direction sélectionnée (X), portées sur la structure (7) lors de la course de fonctionnement (14) et agissant sur une pluralité de contre-cames (33) montées sur les blocs externes respectifs (24a,24b) des tiges (18), ledit couple de cames (36,37) étant situé entre les contre-cames (33) de la paire de blocs externes (24a,24b) sur chaque tige (18) lors de la course de fonctionnement (14).

5. Appareil selon la revendication 4, caractérisé en ce que lesdits moyens d'accès (35) comprennent un second couple de cames convergentes (38,39) formant un angle par rapport à la direction sélectionnée (X), portées sur la structure (7) lors de la course rétrograde (17) et conçues pour s'engrener avec lesdites contre-cames (33), le second couple de cames (38,39) enjambant les contre-cames (33) de la paire de blocs externes (24a,24b) sur chaque tige (18) lors de la course rétrograde (17).

6. Appareil selon la revendication 1, caractérisé en ce qu'il comprend des moyens inverses (41) montés sur ladite structure (7) en aval de la course de fonctionnement (14) pour dégager les denrées alimentaires (3) des doigts (31).

7. Appareil selon la revendication 6, caractérisé en ce que lesdits moyens inverses (41) comprennent une série de peignes (42) parallèles coplanaires mutuellement espacés, s'étendant sensiblement dans le prolongement de ladite course de fonctionnement (14).

8. Appareil selon la revendication 1, caractérisé en ce que ladite structure (7) s'étend en aval de ladite bande convoyeuse (4) et comprend une plaque plane (40) s'étendant au même niveau que la bande convoyeuse (4) sensiblement dans son prolongement et en dessous de ladite course de fonctionnement (14).

FIG.1

FIG.2

EP 0 440 848 B1

FIG.3

FIG.5

FIG.6

FIG.4